# EUROPEAN PATENT APPLICATION

(11) **EP 4 304 109 A1**
(43) Date of publication of application: **10.01.2024**
(21) Application number: 22778651.4
(22) Date of filing: 22.03.2022
(51) Int. Cl.: H04B 10/112, H04B 10/11, H04B 10/50, H04B 17/11

(54) **SPATIAL LIGHT TRANSMISSION METHOD AND RELATED DEVICE**

(30) Priority: 31.03.2021 CN 202110352446
(71) Applicant: Huawei Technologies Co., Ltd., Longgang Shenzhen, Guangdong 518129 (CN)
(72) Inventor: CAI, Wenchao, Shenzhen, Guangdong 518129 (CN); WANG, Weijie, Shenzhen, Guangdong 518129 (CN); ZENG, Yan, Shenzhen, Guangdong 518129 (CN)
(74) Representative: Goddar, Heinz J.
(86) International application number: PCT/CN2022/082177
(87) International publication number: WO 2022/206468

(57) **Abstract**

Embodiments of this application disclose a spatial light transmission method and a related device. The method in embodiments of this application includes: An access point AP generates original spatial light. Further, the AP modulates the original spatial light based on a first modulation parameter to obtain first spatial light, and modulates the original spatial light based on a second modulation parameter to obtain second spatial light. The AP needs to split the first spatial light and the second spatial light, then adjust a deflection direction of the first spatial light to perform beam alignment on a first STA, and adjust a deflection direction of the second spatial light to perform beam alignment on a second STA. The first spatial light is transmitted along a first light path, and the second spatial light is transmitted along a second light path. In the foregoing manner, compared with a point-to-point spatial light communication system, a corresponding AP is not required to be configured for each STA, and spatial light alignment and communication on a plurality of STAs may be performed by using only one AP, thereby simplifying a structure of a spatial light communication system.

## Description

This application claims priority to Chinese Patent Application No. 202110352446.0, filed with the China National Intellectual Property Administration on March 31, 2021 and entitled "SPATIAL LIGHT TRANSMISSION METHOD AND RELATED DEVICE", which is incorporated herein by reference in its entirety.

### TECHNICAL FIELD

This application relates to the field of optical communication, and in particular, to a spatial light transmission method and a related device.

### BACKGROUND

A spatial light communication system is an optical communication system in which a laser light wave is used as a carrier and atmosphere is used as a transmission medium. How to implement beam acquisition, tracking and pointing (acquisition, tracking and pointing, ATP) is a core issue in free spatial light communication. A current spatial light communication system is a point-to-point system, to be specific, an access point (access point, AP) and a station (station, STA) are in a one-to-one correspondence. The AP scans emitted spatial light to align and track the STA. However, such a point-to-point spatial light communication system has poor extensibility, and a large quantity of APs need to be configured in a scenario of a large quantity of STAs, resulting in high system complexity.

### SUMMARY

This application provides a spatial light transmission method and a related device. In this way, point-to-multipoint spatial light communication is implemented, a corresponding AP is not required to be configured for each STA, and spatial light alignment and communication on a plurality of STAs may be performed by using only one AP, thereby simplifying a structure of a spatial light communication system.

According to a first aspect, this application provides a spatial light transmission method applied to an AP, and the method includes the following steps. The AP first generates original spatial light. Further, the AP modulates the original spatial light based on a first modulation parameter to obtain first spatial light, and modulates the original spatial light based on a second modulation parameter to obtain second spatial light. The AP needs to split the first spatial light and the second spatial light, adjust a deflection direction of the first spatial light to perform beam alignment on a first STA, and adjust a deflection direction of the second spatial light to perform beam alignment on a second STA. The first spatial light is transmitted along a first light path, and the second spatial light is transmitted along a second light path. The first modulation parameter is different from the second modulation parameter, so that the AP may distinguish the first STA from the second STA. Therefore, whether beam alignment is implemented between the AP and the first STA and between the AP and the second STA may be separately determined.

In this implementation, a point-to-multipoint spatial light transmission method is provided, and is used by an AP to perform spatial light communication with a plurality of STAs. Specifically, the AP may split spatial light sent to different STAs, adjust a deflection direction of each spatial light to respectively align each STA, and each STA sends return light to the AP based on an original returning light path. Because the AP uses different modulation parameters for the spatial light sent to different STAs, it is convenient for the AP to identify the return light of each STA to determine whether beam alignment on each STA is implemented. In the foregoing manner, compared with a point-to-point spatial light communication system, a corresponding AP is not required to be configured for each STA, and spatial light alignment and communication on a plurality of STAs may be performed by using only one AP, thereby simplifying a structure of a spatial light communication system.

In some possible implementations, that the first modulation parameter of the first spatial light is different from the second modulation parameter of the second spatial light includes but is not limited to at least one of the following: 1. A time period for emitting the first spatial light is different from a time period for emitting the second spatial light. 2. A first flicker frequency of the first spatial light is different from a second flicker frequency of the second spatial light. 3. A first wavelength of the first spatial light is different from a second wavelength of the second spatial light. 4. A first light intensity of the first spatial light is different from a second light intensity of the second spatial light. In this implementation, a plurality of types of modulation parameters are listed, so that this solution is more practical.

In some possible implementations, the method further includes: The AP receives first return light from the first STA, and receives second return light from the second STA. A transmission path of the first return light is the same as that of the first spatial light, and a transmission path of the second return light is the same as that of the second spatial light. Further, the AP identifies the first return light based on the first modulation parameter, and identifies the second return light based on the second modulation parameter. If the AP identifies return light, it indicates that a STA corresponding to the return light completes beam alignment with the AP. In the foregoing manner, the first STA and the second STA may separately send return light to the AP based on reversibility of the light path, and then the AP separately identifies the return light of the first STA and the second STA, thereby improving implementability of this solution.

In some possible implementations, the method further includes: The AP determines a first light filtering manner used by the first STA and a second light filtering manner used by the second STA. The first STA uses the first light filtering manner to perform light filtering on the first spatial light to obtain the first return light, and sends the first return light to the AP. The second STA uses the second light filtering manner to perform light filtering on the second spatial light to obtain the second return light, and sends the second return light to the AP. A transmission path of the first return light is the same as that of the first spatial light, and a transmission path of the second return light is the same as that of the second spatial light. Further, the AP identifies the return light of the first STA based on the first light filtering manner, and identifies the return light of the second STA based on the second light filtering manner. In the foregoing manner, in addition to that the AP needs to use different modulation manners for the spatial light sent to different STAs, the first STA and the second STA may also use different light filtering manners to further modulate respective received spatial light. Therefore, the AP is enabled to better distinguish the return light of the first STA from the return light of the second STA.

In some possible implementations, the method further includes: The AP modulates the original spatial light to obtain third spatial light, and adjusts a deflection direction of the third spatial light to send the third spatial light to a third STA, to improve extensibility of this solution. A third modulation parameter of the third spatial light is different from both the first modulation parameter and the second modulation parameter.

In some possible implementations, the original spatial light may be beacon light dedicated for beam alignment, or may be communication light used for optical communication, thereby improving flexibility of this solution.

According to a second aspect, this application provides a spatial light transmission method applied to a STA, and the method includes the following steps. First, the STA receives original spatial light sent by an AP. Then, the STA determines a first modulation parameter, and modulates the original spatial light based on the first modulation parameter to obtain first spatial light. Further, the STA sends the first spatial light to the AP, where a transmission path of the first spatial light is the same as that of the original spatial light. In the foregoing manner, compared with a point-to-point spatial light transmission system in which the STA directly reflects return light to the spatial light from the AP, in this solution, the STA modulates the received spatial light and then sends return light to the AP. Therefore, this solution may be extended to a point-to-multipoint spatial light transmission system, that is, different STAs use different modulation manners to send return light for a same type of spatial light that is from the AP, so that the AP may distinguish the return light from different STAs, and spatial light alignment and communication on a plurality of STAs may be performed by using only one AP, thereby simplifying a structure of the spatial light communication system.

In some possible implementations, the first modulation parameter includes a first flicker frequency, a first wavelength, and/or a first light intensity. In this implementation, a plurality of types of modulation parameters are listed, so that this solution is more practical.

In some possible implementations, that the STA determines a first modulation parameter includes: The STA receives an indication message sent by the AP. Further, the STA determines the first modulation parameter based on the indication message. In the foregoing manner, the AP and the STA may negotiate the first modulation parameter in advance, so as to ensure that the AP allocates a different modulation parameter to each STA, thereby avoiding a conflict in which different STAs use a same modulation parameter to send return light.

In some possible implementations, that the STA determines a first modulation parameter includes: The STA selects the first modulation parameter from a locally-stored modulation parameter set. In the foregoing manner, another manner of determining the first modulation parameter by the STA is provided, thereby improving flexibility of this solution.

In some possible implementations, the method further includes: If the AP does not identify the first spatial light within preset duration, it indicates that another STA also sends return light by using a same modulation parameter. In this case, the STA may reselect a second modulation parameter from the modulation parameter set, and modulate the original spatial light based on the second modulation parameter to obtain second spatial light. Further, the STA sends the second spatial light to the AP, where a transmission path of the second spatial light is the same as that of the original spatial light. In the foregoing manner, the STA may flexibly change a modulation parameter to send return light to the AP, thereby avoiding a conflict in which different STAs use a same modulation parameter to send return light.

According to a third aspect, this application provides an AP, including a light source, a light modulation apparatus, a light splitting apparatus and a beam deflection apparatus. The light source first generates original spatial light. Then, the light modulation apparatus modulates the original spatial light to obtain first spatial light, and modulates the original spatial light to obtain second spatial light. A first modulation parameter of the first spatial light is different from a second modulation parameter of the second spatial light. The light splitting apparatus is configured to split the first spatial light and the second spatial light. Further, the beam deflection apparatus is configured to adjust a deflection direction of the first spatial light to send the first spatial light to a first STA, and adjust a deflection direction of the second spatial light to send the second spatial light to a second STA. The first spatial light is transmitted along a first light path, and the second spatial light is transmitted along a second light path.

In some possible implementations, that a first modulation parameter of the first spatial light is different from a second modulation parameter of the second spatial light includes but is not limited to at least one of the following: 1. A time period for emitting the first spatial light is different from a time period for emitting the second spatial light. 2. A first flicker frequency of the first spatial light is different from a second flicker frequency of the second spatial light. 3. A first wavelength of the first spatial light is different from a second wavelength of the second spatial light. 4. A first light intensity of the first spatial light is different from a second light intensity of the second spatial light. In this implementation, a plurality of types of modulation parameters are listed, so that this solution is more practical.

In some possible implementations, the AP further includes a photodetector. The photodetector is configured to identify the first return light from the first STA based on the first modulation parameter, and identify the second return light from the second STA based on the second modulation parameter. A transmission path of the first return light is the same as that of the first spatial light, and a transmission path of the second return light is the same as that of the second spatial light.

In some possible implementations, the AP further includes a photodetector. The photodetector is configured to determine a first light filtering manner used by the first STA and a second light filtering manner used by the second STA. Then, the photodetector is configured to receive the first return light from the first STA, and receives the second return light from the second STA. The first return light is obtained by the first STA by performing light filtering on the first spatial light based on the first light filtering manner, and the second return light is obtained by the second STA by performing light filtering on the second spatial light based on the second light filtering manner, where a transmission path of the first return light is the same as that of the first spatial light, and a transmission path of the second return light is the same as that of the second spatial light. Further, the photodetector is configured to identify the return light of the first STA based on the first light filtering manner, and identify the return light of the second STA based on the second light filtering manner.

In some possible implementations, the processor is further configured to modulate the original spatial light to obtain third spatial light. The beam deflection apparatus is further configured to adjust a deflection direction of the third spatial light to send the third spatial light to a third STA. A third modulation parameter of the third spatial light is different from both the first modulation parameter and the second modulation parameter.

In some possible implementations, the original spatial light may be beacon light dedicated for beam alignment, or may be communication light used for optical communication, thereby improving flexibility of this solution.

According to a fourth aspect, this application provides a STA, including a light returning apparatus and a light modulation apparatus. The light returning apparatus is configured to receive original spatial light sent by an access point AP. The light modulation apparatus is configured to determine a first modulation parameter, and modulate the original spatial light based on the first modulation parameter to obtain first spatial light. The light returning apparatus is further configured to send the first spatial light to the AP, where a transmission path of the first spatial light is the same as that of the original spatial light.

In some possible implementations, the first modulation parameter includes a first flicker frequency, a first wavelength, and/or a first light intensity.

In some possible implementations, the light modulation apparatus is specifically configured to determine the first modulation parameter based on an indication message from the AP.

In some possible implementations, the light modulation apparatus is specifically configured to select the first modulation parameter from a locally-stored modulation parameter set.

In some possible implementations, if the AP does not identify the first spatial light within preset duration, the light modulation apparatus is further configured to select a second modulation parameter from the modulation parameter set, modulate the original spatial light based on the second modulation parameter to obtain second spatial light, and send the second spatial light to the AP. A transmission path of the second spatial light is the same as that of the original spatial light.

According to a fifth aspect, this application provides a spatial light communication system, including an AP, a first STA, and a second STA. Specifically, the AP is configured to generate original spatial light, modulate the original spatial light to obtain first spatial light, and modulate the original spatial light to obtain second spatial light. A first modulation parameter of the first spatial light is different from a second modulation parameter of the second spatial light. The AP is further configured to split the first spatial light and the second spatial light, adjust a deflection direction of the first spatial light to send the first spatial light to the first STA, and adjust a deflection direction of the second spatial light to send the second spatial light to the second STA, where the first spatial light is transmitted along a first light path, and the second spatial light is transmitted along a second light path. The first STA is configured to send first return light to the AP, where a transmission path of the first return light is the same as that of the first spatial light. The second STA is configured to send second return light to the AP, where a transmission path of the second return light is the same as that of the second spatial light. The AP is further configured to identify the first return light based on the first modulation parameter, and identify the second return light based on the second modulation parameter.

According to a sixth aspect, this application provides a spatial light communication system, including an AP, a first STA, and a second STA. Specifically, the AP is configured to split original spatial light to obtain first spatial light and second spatial light, adjust a deflection direction of the first spatial light to send the first spatial light to the first STA, and adjust a deflection direction of the second spatial light to send the second spatial light to the second STA. The first STA is configured to modulate the first spatial light based on a first modulation parameter to obtain first return light, and send the first return light to the AP, where a transmission path of the first spatial light is the same as that of the first return light. The second STA is configured to modulate the second spatial light based on a second modulation parameter to obtain second return light, and send the second return light to the AP, where a transmission path of the second spatial light is the same as that of the second return light. The first modulation parameter is different from the second modulation parameter.

According to a seventh aspect, this application provides a computer-readable storage medium, where the computer-readable storage medium stores a computer program, and when the computer program is executed by hardware, some or all steps of any method in the first aspect and the second aspect can be implemented.

In embodiments of this application, a point-to-multipoint spatial light transmission method is provided, and is used by an AP to perform spatial light communication with a plurality of STAs. Specifically, the AP may split spatial light sent to different STAs, adjust a deflection direction of each spatial light to respectively align each STA, and each STA sends return light to the AP based on an original returning light path. Because the AP uses different modulation parameters for the spatial light sent to different STAs, it is convenient for the AP to identify the return light of each STA to determine whether beam alignment on each STA is implemented. In the foregoing manner, compared with a point-to-point spatial light communication system, a corresponding AP is not required to be configured for each STA, and spatial light alignment and communication on a plurality of STAs may be performed by using only one AP, thereby simplifying a structure of a spatial light communication system.

### BRIEF DESCRIPTION OF DRAWINGS

FIG. 1 is a schematic diagram of a first spatial light communication system according to an embodiment of this application;
FIG. 2 is a schematic diagram of a first embodiment of a spatial light transmission method according to this application;
FIG. 3 is a schematic diagram of a second spatial light communication system according to an embodiment of this application;
FIG. 4 is a schematic diagram of a structure of a light splitting apparatus according to an embodiment of this application;
FIG. 5 is a schematic diagram of a second embodiment of a spatial light transmission method according to this application;
FIG. 6 is a schematic diagram of a third spatial light communication system according to an embodiment of this application;
FIG. 7 is a schematic diagram of a fourth spatial light communication system according to an embodiment of this application;
FIG. 8 is a schematic diagram of a structure of a possible AP according to an embodiment of this application;
FIG. 9 is a schematic diagram of a structure of a possible STA according to an embodiment of this application;
FIG. 10 is a schematic diagram of a structure of another possible AP according to an embodiment of this application;
FIG. 11 is a schematic diagram of a structure of another possible STA according to an embodiment of this application; and
FIG. 12 is a schematic diagram of a structure of a spatial light communication system according to an embodiment of this application.

### DESCRIPTION OF EMBODIMENTS

Embodiments of this application provide a spatial light transmission method and a related device, used for performing spatial light alignment between an AP and a plurality of STAs, thereby simplifying a structure of a spatial light communication system. It should be noted that, the terms "first", "second", and the like in the specification, claims, and the accompanying drawings of this application are intended to distinguish between similar objects, but do not limit a specific order or sequence. It should be understood that the foregoing terms may be interchanged in proper cases, so that embodiments described in this application can be implemented in an order other than the content described in this application. In addition, the terms "include" and "have" and any variation thereof are intended to cover non-exclusive inclusion. For example, a process, method, system, product, or device that includes a series of steps or units is not necessarily limited to those steps or units that are clearly listed, but may include other steps or units that are not clearly listed or that are inherent to the process, method, product, or device.

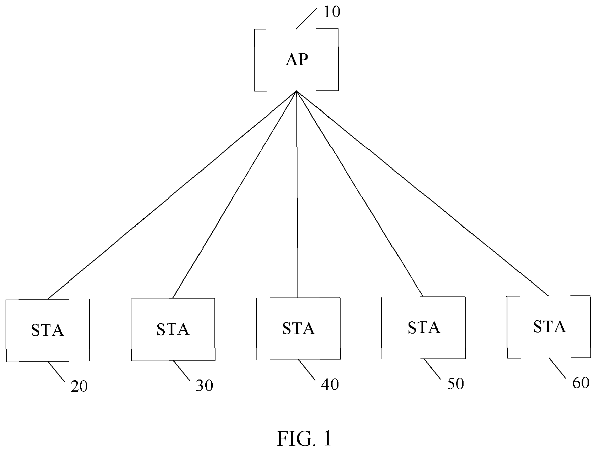

FIG. 1 is a schematic diagram of a first spatial light communication system according to an embodiment of this application. As shown in FIG. 1, the spatial light communication system includes an AP (10) and a plurality of STAs. For example, the plurality of STAs include a STA (20), a STA (30), a STA (40), a STA (50), and a STA (60). In other words, this application is applied to a point-to-multipoint spatial light communication system. It should be understood that the AP and each STA can normally perform spatial light communication only on a premise that beam alignment between the AP and each STA is implemented. Specifically, the AP needs to emit corresponding spatial light to each STA, to track and align each STA. If spatial light emitted by the AP is aligned with one STA, the STA may send return light to the AP based on an original returning light path. Further, the AP identifies the return light of the STA, to determine that beam alignment with the STA is implemented. However, because the AP may receive return light of a plurality of STAs, the AP needs to identify each received return light, so as to determine each STA aligned with the AP. Therefore, in this solution, a different modulation manner needs to be used for each spatial light for distinguishing. The following describes in detail the spatial light transmission method provided in embodiments of this application.

It should be noted that, in embodiments of this application, implementations of modulating a plurality of spatial light may be mainly divided into three types. First, the AP modulates each spatial light. Second, each STA modulates the corresponding spatial light. Third, the AP and each STA jointly participate in spatial light modulation. It should be understood that a specific quantity of STAs in the point-to-multipoint spatial light communication system is not limited in this application. For ease of description, an example in which two STAs are included in the system is mainly used in the following to describe the foregoing implementations in detail.

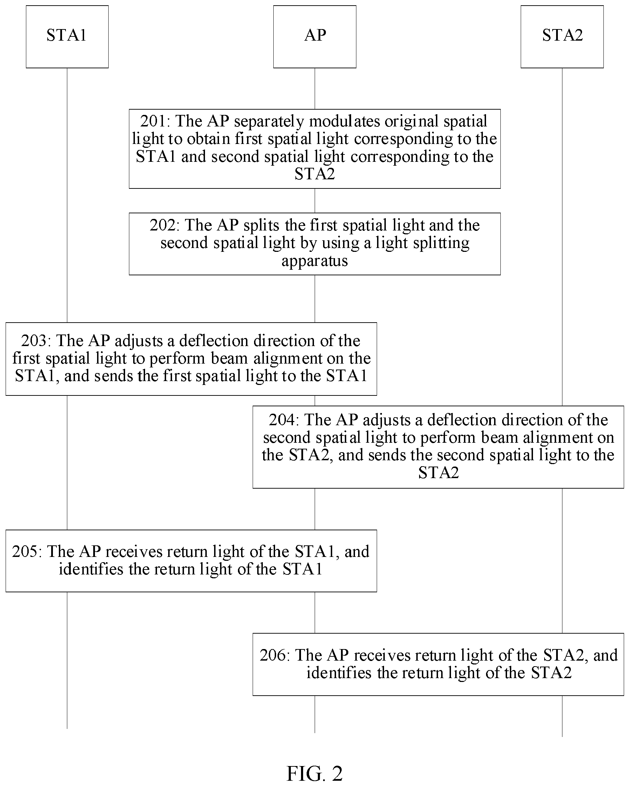

FIG. 2 is a schematic diagram of a first embodiment of a spatial light transmission method according to this application. In this example, the AP modulates each spatial light, and the spatial light transmission method includes the following steps.

201: The AP separately modulates original spatial light to obtain first spatial light corresponding to a STA1 and second spatial light corresponding to a STA2.

In this embodiment, different modulation manners need to be used for spatial light emitted by the AP to the STA1 and the STA2, so that the AP distinguishes return light of the STA1 from that of the STA2. Specifically, the AP modulates the original spatial light by using a first modulation parameter to obtain the first spatial light corresponding to the STA1. The AP modulates the original spatial light by using a second modulation parameter to obtain the second spatial light corresponding to the STA2. It should be understood that there may be a plurality of types of modulation parameters used by the AP to modulate the original spatial light. A case in which the first modulation parameter is different from the second modulation parameter includes but is not limited to at least one of the following:

1. A time period for emitting the first spatial light is different from a time period for emitting the second spatial light. In other words, the spatial light sent to the first STA and the spatial light sent to the second STA are modulated in a manner of sending the spatial light at different times.

2. A first flicker frequency of the first spatial light is different from a second flicker frequency of the second spatial light. For example, a quantity of flickers per second of the first spatial light is different from that of the second spatial light.

3. A first wavelength of the first spatial light is different from a second wavelength of the second spatial light. It should be understood that the first wavelength and the second wavelength may be specific wavelengths, or may be wavelength ranges. This is not specifically limited herein.

4. A first light intensity of the first spatial light is different from a second light intensity of the second spatial light.

A plurality of types of modulation parameters are listed above. It should be understood that, in an actual application, the first STA may be distinguished from the second STA by using only one type of modulation parameter. In addition, to achieve a better differentiation effect, the first STA may also be distinguished from the second STA by combining the foregoing plurality of different types of modulation parameters. In a possible implementation, the AP may separately send the original spatial light to the first STA and the second STA only at different times, and does not perform another type of modulation on the original spatial light. In another possible implementation, the AP may alternatively perform another type of modulation on the original spatial light based on sending the original spatial light at different times. For example, a wavelength of the first spatial light is different from that of the second spatial light. In this manner, a problem that the return light of the STA1 cannot be easily distinguished from the return light of the STA2 due to insufficient time synchronization precision of the AP may be avoided. In addition, if time synchronization precision of the AP is very good, the first spatial light and the second spatial light may be modulated to a same wavelength, and a main purpose thereof is to avoid interference of background light such as sunlight and light in space.

It should be noted that, the spatial light used in this embodiment of this application may be beacon light dedicated for beam alignment, or may be communication light used for optical communication. It should be understood that the beacon light and the communication light are light in different frequency bands. That is, the AP in this embodiment of this application may integrate a beacon light source and a communication light source, or may be provided with only a communication light source. This is not specifically limited herein.

202: The AP splits the first spatial light and the second spatial light by using a light splitting apparatus.

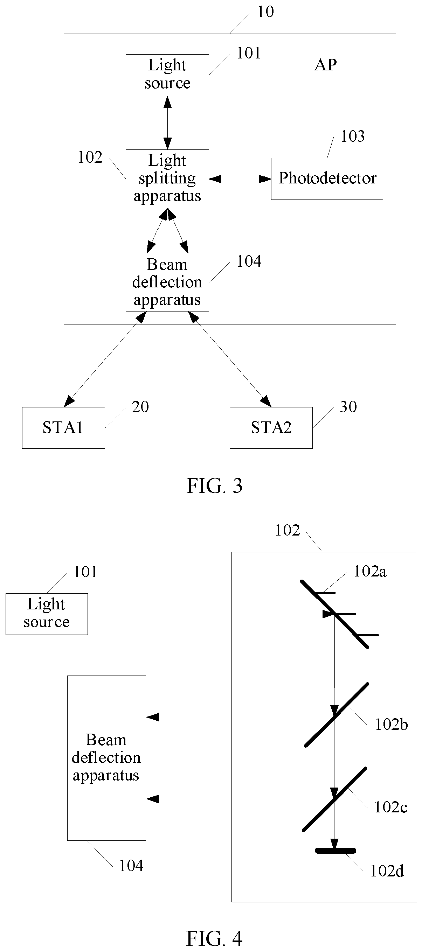

In this embodiment, the AP may output spatial light with different modulation parameters by using only one light source. The AP splits, by using the light splitting apparatus, spatial light sent to different STAs. The following describes the implementation with reference to a structure of the AP. FIG. 3 is a schematic diagram of a second spatial light communication system according to an embodiment of this application. As shown in FIG. 3, a light source 101 is configured to output spatial light with different modulation parameters, for example, first spatial light and second spatial light. A light splitting apparatus 102 is configured to split the first spatial light and the second spatial light. Further, a beam deflection apparatus 104 is configured to adjust deflection directions of the first spatial light and the second spatial light, so as to separately perform beam alignment on a STA1 and a STA2.

FIG. 4 is a schematic diagram of a structure of a light splitting apparatus according to an embodiment of this application. As shown in FIG. 4, the light splitting apparatus 102 includes a reflector 102a, a light splitter 102b, and a light splitter 102c. Specifically, the spatial light outputted by the light source 101 is first reflected by the reflector 102a. The spatial light arriving at the light splitter 102b is split, where one spatial light is reflected to the beam deflection apparatus 104 and another is transmitted to the light splitter 102c. Similarly, the spatial light arriving at the light splitter 102b is split, where one spatial light is reflected to the beam deflection apparatus 104 and another is transmitted to a light barrier 102d. In this manner, the spatial light sent to different STAs may be split. It should be understood that FIG. 4 is only an example of an implementation of a light path. In an actual application, various optical elements such as a reflector, a light splitter, and a dichroic mirror may be used for establishing light paths at different spatial positions.

In a possible implementation, the light splitter 102b and the light splitter 102c perform light splitting based on energy of light. Therefore, the light source 101 may send the first spatial light and the second spatial light at different times. Specifically, the AP allocates a time period to each STA based on a current quantity of STAs. For example, the STA1 corresponds to a first time period, and the STA2 corresponds to a second time period. The light source 101 outputs the first spatial light in the first time period, and outputs the second spatial light in the second time period. Because the first spatial light and the second spatial light are sent at different times, it is convenient for the beam deflection apparatus 104 to separately adjust deflection directions of the first spatial light and the second spatial light.

In another possible implementation, the light splitter 102b and the light splitter 102c perform light splitting based on a wavelength of light. Therefore, wavelengths of the modulated first spatial light and the modulated second spatial light should be different. Specifically, the light splitter 102b is configured to reflect the first spatial light and transmit the second spatial light. The light splitter 102c is configured to reflect the second spatial light and transmit spatial light with another wavelength. After being reflected by the first light splitter 102b, the first spatial light is transmitted to the beam deflection apparatus 104. After being reflected by the second light splitter 102c, the second spatial light is also transmitted to the beam deflection apparatus 104. In this wavelength division manner, the light source 101 may also emit the first spatial light and the second spatial light at the same time. The beam deflection apparatus 104 distinguishes the first spatial light from the second spatial light by a wavelength, so as to separately adjust deflection directions of the first spatial light and the second spatial light.

It should be understood that, in addition to the structure of the light splitting apparatus described above, another form of light splitting apparatus may exist in an actual application. For example, a device such as a diffractive optical element (diffractive optical element, DOE) may be used for light splitting. This is not specifically limited herein. In addition, in addition to the implementation of a single light source described above, an implementation of a plurality of light sources may also be used in an actual application. For example, a corresponding light source is configured for each STA, a first light source outputs the first spatial light, and a second light source outputs the second spatial light. This is not specifically limited herein.

203: The AP adjusts a deflection direction of the first spatial light to perform beam alignment on the STA1, and sends the first spatial light to the STA1.

In this embodiment, a position of the STA1 may change due to movement. Therefore, the AP needs to adjust the deflection direction of the first spatial light to track the STA1 and perform beam alignment on the STA1. Further, the first spatial light may be sent to the STA1 along a first light path obtained through beam alignment. In a possible implementation, the AP may obtain position information of the STA1 by a position detection apparatus (not shown in FIG. 3) such as a charge coupled device (charge coupled device, CCD) camera. Further, the position detection apparatus may feed back the position information of the STA1 to the beam deflection apparatus 104 shown in FIG. 3, and the beam deflection apparatus 104 adjusts the deflection direction of the first spatial light. The beam deflection apparatus 104 includes but is not limited to a micro electro mechanical system (micro electro mechanical system, MEMS) deflection device, a liquid crystal deflection device, and an optical phased array. It should be noted that, the light splitting apparatus 102 and the beam deflection apparatus 104 are only two functionally-divided apparatuses. In an actual application, the apparatuses may be two independent devices, or may be a device integrating the two apparatuses. For example, the light splitting apparatus 102 uses the structure shown in FIG. 4, and the beam deflection apparatus 104 uses a MEMS deflection device. For another example, functions of the light splitting apparatus 102 and the beam deflection apparatus 104 may be implemented by the liquid crystal deflection apparatus. Specifically, one large light spot may be divided into a plurality of small light spots by using the liquid crystal deflection apparatus, and a beam corresponding to each small light spot is deflected in a different direction.

204: The AP adjusts a deflection direction of the second spatial light to perform beam alignment on the STA2, and sends the second spatial light to the STA2.

A position of the STA2 may also change due to movement. Therefore, the AP needs to adjust the deflection direction of the second spatial light to track the STA2 and perform beam alignment on the STA2. Further, the second spatial light may be sent to the STA1 along a second light path obtained through beam alignment. It should be understood that a manner of adjusting the deflection direction of the second spatial light is similar to the manner described in the foregoing step 202, and details are not described herein again.

205: The AP receives return light of the STA1, and identifies the return light of the STA1.

In this embodiment, after receiving the first spatial light from the AP, the STA1 may send return light to the AP based on an original returning light path. Because the STA1 may receive the first spatial light from the AP, the AP may also receive the return light of the STA1 on the original returning light path of the first spatial light. In a possible implementation, the STA1 may directly reflect the first spatial light from the AP. For example, the STA1 reflects the first spatial light by using a pyramid prism, so that the return light of the STA1 may be transmitted to the AP based on the original returning light path. In another possible implementation, the STA1 may alternatively emit the return light by using a light source of the STA1, and the STA1 may also adjust a deflection direction of the return light, so that the return light may also be transmitted to the AP based on the original returning light path. It should be understood that the return light of the STA1 should have a same modulation parameter as the first spatial light, so that the AP identifies the return light of the STA1. Specifically, the AP may identify the return light by using the photodetector 103 shown in FIG. 3. Because the modulation parameter of the return light of the STA1 is different from a modulation parameter of return light of the STA2, the AP may identify, based on a modulation parameter, whether received return light is from the STA1 or the STA2, and further may determine whether the STA1 or the STA2 completes beam alignment with the AP. The photodetector includes but is not limited to a position sensitive detector (position sensitive detector, PSD), a quadrant photodiode (quadrant photodiode, QPD), a photodiode (photodiode, PD), and an avalanche photodiode (avalanche photodiode, APD).

206. The AP receives return light of the STA2, and identifies the return light of the STA2.

After receiving the second spatial light from the AP, the STA2 may send return light to the AP based on an original returning light path. Because the STA2 may receive the second spatial light from the AP, the AP may also receive the return light of the STA2 on the original returning light path of the second spatial light. It should be understood that a light return manner of the STA2 and a manner of identifying the return light of the STA2 by the AP are similar to the manners described in the foregoing step 204, and details are not described herein again.

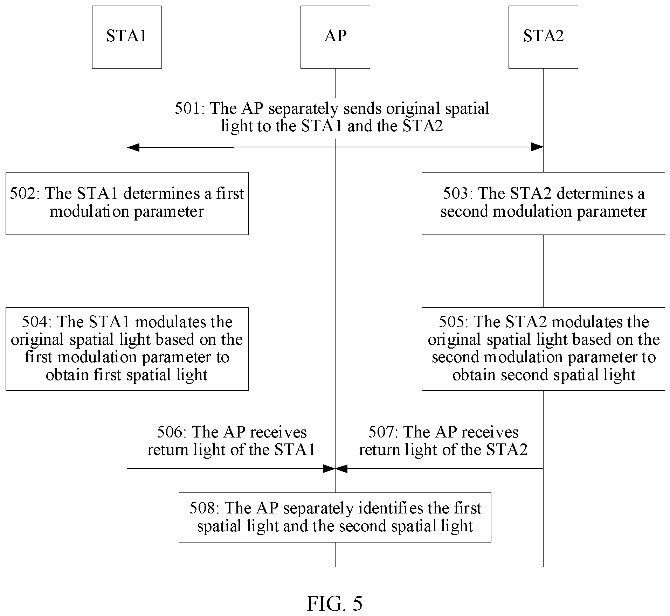

FIG. 5 is a schematic diagram of a second embodiment of a spatial light transmission method according to this application. In this example, each STA modulates corresponding spatial light, and the spatial light transmission method includes the following steps.

501: An AP separately sends original spatial light to a STA1 and a STA2.

Different from the embodiment shown in FIG. 2, in this embodiment, the AP sends spatial light of a same modulation parameter to the STA1 and the STA2. Using FIG. 3 as an example, the light source 101 is only configured to output original spatial light. After passing through the light splitting apparatus 102, the original spatial light is split into two original spatial light. One original spatial light is aligned with the STA1 after passing through the beam deflection apparatus 104, and another original spatial light is aligned with the STA2 after passing through the beam deflection apparatus 104.

502: The STA1 determines a first modulation parameter.

503: The STA2 determines a second modulation parameter.

In this embodiment, the STA1 and the STA2 need to respectively determine respective modulation parameters for modulating the original spatial light. The first modulation parameter determined by the STA1 needs to be different from the second modulation parameter determined by the STA2, so that the AP distinguishes return light of the STA1 from that of the STA2. It should be understood that descriptions of the first modulation parameter and the second modulation parameter are similar to descriptions of step 201 in the embodiment shown in FIG. 2, and details are not described herein again. It should be noted that, the STA1 and the STA2 may determine respective modulation parameters in a plurality of manners, and this is further described below.

Manner 1: The STA1 and the STA2 may report, to the AP, respective modulation parameters that can be used, and then the AP notifies the STA1 of the first modulation parameter corresponding to the STA1, and notifies the STA2 of the second modulation parameter corresponding to the STA2, so as to ensure that the first modulation parameter is different from the second modulation parameter. Specifically, a communication system different from the foregoing spatial light transmission system may be used for negotiating modulation parameters between the AP and the STA1, and between the AP and the STA2, for example, an optical camera communication (optical camera communication, OCC) system may be used. This is not specifically limited herein.

Manner 2: The STA1 and the STA2 each store a modulation parameter set. The STA1 and the STA2 may each randomly select a modulation parameter from respective modulation parameter sets, to modulate the received original spatial light. After modulating the original spatial light by using the modulation parameters respectively selected by the STA1 and the STA2, the STA1 and the STA2 respectively send return light to the AP based on original returning light paths. If the AP receives and identifies one return light, the AP may determine that a STA corresponding to the return light has completed beam alignment, and then the AP sends an online notification to the STA. However, if the AP receives the return light of the STA1 and return light of the STA2, but cannot identify the two return light, it proves that the STA1 and the STA2 select a same modulation parameter, and the AP naturally does not send an online notification to the STA1 and the STA2. Therefore, if the STA1 or the STA2 cannot receive, within preset duration, the online notification sent by the AP, the STA1 or the STA2 reselects another modulation parameter from the respective modulation parameter set, and repeats the foregoing process until the online notification sent by the AP is received. In the foregoing manner, a conflict caused by different STAs using a same modulation parameter is avoided.

504: The STA1 modulates the original spatial light based on the first modulation parameter to obtain first spatial light.

505: The STA2 modulates the original spatial light based on the second modulation parameter to obtain second spatial light.

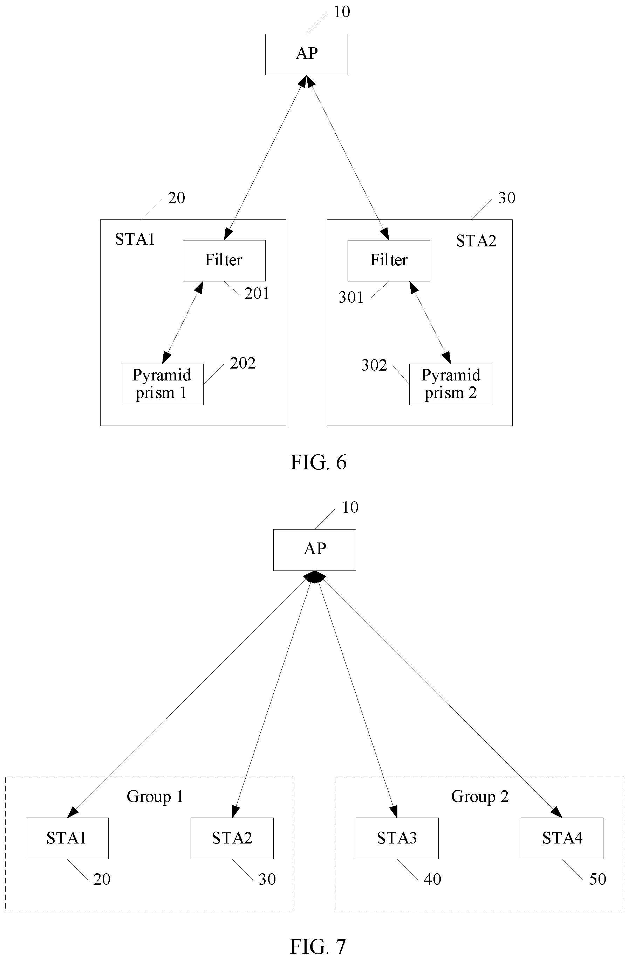

It should be understood that, based on different types of modulation parameters, the STA1 and the STA2 may perform modulation by using corresponding modulation manners. The following uses a wavelength division manner as an example to describe a specific implementation with reference to a structure of the STA. FIG. 6 is a schematic diagram of a third spatial light communication system according to an embodiment of this application. As shown in FIG. 6, a STA1 (20) includes a filter 201 and a pyramid prism 202, and a STA2 (30) includes a filter 301 and a pyramid prism 302. The filter 201 is configured to perform light filtering on original spatial light to obtain first spatial light having a first wavelength, and the filter 301 is configured to perform light filtering on the original spatial light to obtain second spatial light having a second wavelength. Further, the first spatial light is transmitted to an AP based on an original returning light path after being reflected by the pyramid prism 202, and the second spatial light is transmitted to the AP based on an original returning light path after being reflected by the pyramid prism 302. It should be understood that, in addition to the modulation manner shown in FIG. 6, in an actual application, the STA may alternatively select a corresponding modulator based on a type of a modulation parameter to perform modulation. Specifically, types of modulators include, but are not limited to, a multiple quantum well modulator, a ferroelectric liquid crystal modulator, and a phase modulator.

506: The AP receives return light of the STA1.

507: The AP receives return light of the STA2.

In this embodiment, the STA1 and the STA2 send return light to the AP based on the original returning light paths. For example, as shown in FIG. 6, the STA1 and the STA2 may send return light to the AP through reflection of a pyramid prism, so that the return light may be transmitted to the AP based on the original returning light paths. For another example, the STA1 and the STA2 may alternatively emit the return light by using respective light sources. That is, a light source of the STA1 emits the first spatial light, and adjusts a deflection direction of the first spatial light, so that the first spatial light is transmitted to the AP based on the original returning light path. A light source of the STA2 emits the second spatial light, and adjusts a deflection direction of the second spatial light, so that the second spatial light is transmitted to the AP based on the original returning light path.

508: The AP separately identifies the return light of the STA1 and the return light of the STA2.

After receiving return light of STAs, the AP may identify a STA corresponding to each return light based on a modulation parameter, thereby determining the STA that completes beam alignment with the AP.

It should be noted that, the embodiments shown in FIG. 2 and FIG. 5 respectively describe two different implementations in which spatial light is modulated by an AP and spatial light is modulated by a STA. In some possible implementations, the foregoing two implementations may further be combined, so that the AP distinguishes more STAs. In this way, the system may be extended to an application scenario with a larger quantity of STAs. The following uses four STAs as an example to describe an implementation in which the AP and each STA jointly participate in spatial light modulation.

FIG. 7 is a schematic diagram of a fourth spatial light communication system according to an embodiment of this application. As shown in FIG. 7, the spatial light communication system includes an AP (10), a STA1 (20), a STA2 (30), a STA3 (40), and a STA4 (50). Specifically, the AP may group the STA1 to the STA4 based on a modulation capability of each STA. A same modulation parameter is used for spatial light sent by the AP to STAs in a same group, and different modulation parameters are used for spatial light sent by the AP to STAs in different groups. Further, the STAs in a same group use different modulation parameters to send return light. For example, the STA1 to the STA4 may be grouped into two groups, where a group 1 includes the STA1 and the STA2, and a group 2 includes the STA3 and the STA4. The AP sends first spatial light to the STA1 and the STA2, and sends second spatial light to the STA3 and the STA4, where a modulation parameter of the first spatial light is different from that of the second spatial light. After receiving the first spatial light, the STA1 and the STA2 send return light in different modulation manners. After receiving the second spatial light, the STA3 and the STA4 also send return light in different modulation manners. Based on the foregoing manner, the STA1 and the STA2 are distinguished from the STA3 and the STA4 by modulation performed by the AP on the spatial light, and the STA1 is further distinguished from the STA2 and the STA3 is further distinguished from the STA4 by modulation performed by each STA on the spatial light. Therefore, the AP may perform identification after receiving return light of each STA, thereby determining a STA that completes beam alignment with the AP. It should be noted that, for an internal structure of the AP and an implementation of modulation performed by the AP on the spatial light, refer to related descriptions of the embodiment shown in FIG. 2, for an internal structure of the STA and an implementation of modulation performed by the STA on the spatial light, refer to related descriptions of the embodiment shown in FIG. 5, and details are not described herein again.

In embodiments of this application, a point-to-multipoint spatial light transmission method is provided, and is used by an AP to perform spatial light communication with a plurality of STAs. Specifically, the AP may split spatial light sent to different STAs, adjust a deflection direction of each spatial light to respectively align each STA, and each STA sends return light to the AP based on an original returning light path. Because the AP uses different modulation parameters for the spatial light sent to different STAs, it is convenient for the AP to identify the return light of each STA to determine whether beam alignment on each STA is implemented. In the foregoing manner, compared with a point-to-point spatial light communication system, a corresponding AP is not required to be configured for each STA, and spatial light alignment and communication on a plurality of STAs may be performed by using only one AP, thereby simplifying a structure of a spatial light communication system.

It should be noted that, compared with the point-to-point spatial light transmission system in which the STA directly reflects return light to the spatial light from the AP, in this solution, the STA modulates the received spatial light and then sends return light to the AP. In addition, different STAs use different modulation parameters to send return light to the AP. For details, refer to the description of step 502 and step 503. In this way, regardless of whether the AP modulates the spatial light sent to different STAs separately, as long as each STA sends return light to the AP by using a respective modulation parameter, the AP can distinguish the return light of each STA. That is, this solution is not limited to improvement on an AP side, and each STA that communicates with the AP may also modulate the return light. Therefore, with improvement of the STA, an implementation of point-to-multipoint spatial light communication is extended.

The foregoing describes the spatial light transmission method in embodiments of this application, and the following describes an AP and a STA in embodiments of this application.

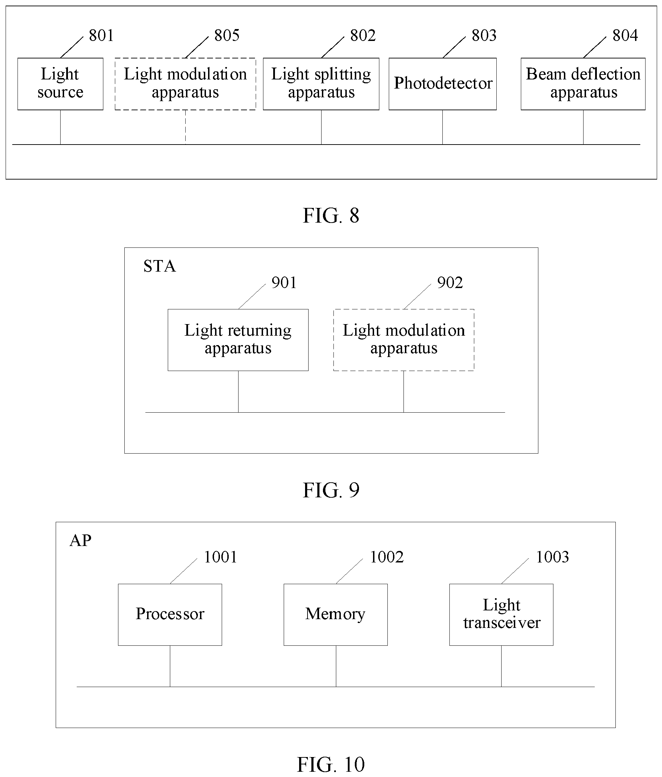

FIG. 8 is a schematic diagram of a structure of a possible AP according to an embodiment of this application. As shown in FIG. 8, the AP includes a light source 801, a light splitting apparatus 802, a photodetector 803, and a beam deflection apparatus 804. Specifically, the light source 801 is configured to perform operations of step 201 in the embodiment shown in FIG. 2 or operations of step 501 in the embodiment shown in FIG. 5. In a possible implementation, the light source 801 is a light source with a modulation function, that is, the light source 801 may modulate original spatial light generated by the light source 801. In another possible implementation, the light source 801 may alternatively be a light source without a modulation function. In this case, the AP further includes a light modulation apparatus 805, where the light modulation apparatus 805 is configured to modulate the original spatial light outputted by the light source 801. The light splitting apparatus 802 is configured to perform operations of step 202 in the embodiment shown in FIG. 2. The beam deflection apparatus 804 is configured to perform operations of step 203 and step 204 in the embodiment shown in FIG. 2. The photodetector 803 is configured to perform operations performed by the AP of step 205 and step 206 in the embodiment shown in FIG. 2 or operations of step 508 in the embodiment shown in FIG. 5.

FIG. 9 is a schematic diagram of a structure of a possible STA according to an embodiment of this application. As shown in FIG. 9, the STA includes a light returning apparatus 901, and optionally, the STA may further include a light modulation apparatus 902. Specifically, the light returning apparatus 901 is configured to perform operations performed by the STA of step 205 and step 206 in the embodiment shown in FIG. 2 or operations of step 506 and step 507 in the embodiment shown in FIG. 5. The light modulation apparatus 902 is configured to perform operations of step 504 and step 505 in the embodiment shown in FIG. 5. It should be understood that, in an actual application, a light source, a beam deflection apparatus, and the like similar to those shown in FIG. 8 are also disposed in the STA, and are specifically configured to emit spatial light to an AP by the STA to perform beam alignment. A specific implementation is similar to that of the AP, and details are not described herein.

FIG. 10 is a schematic diagram of a structure of another possible AP according to an embodiment of this application. As shown in FIG. 10, the AP includes a processor 1001, a memory 1002, and a light transceiver 1003. The processor 1001, the memory 1002, and the light transceiver 1003 are connected to each other through a line. The memory 1002 is configured to store program instructions and data. The light transceiver 1003 includes a transmitter and a receiver. In a possible implementation, the memory 1002 stores program instructions and data that support the steps in the embodiments shown in FIG. 2 and FIG. 5, and the processor 1001 and the light transceiver 1003 are configured to perform the method steps on an AP side in the embodiments shown in FIG. 2 and FIG. 5. Specifically, the light transceiver 1001 is configured to perform an operation of beam sending and receiving, and the processor 1001 is configured to perform another operation except beam sending and receiving.

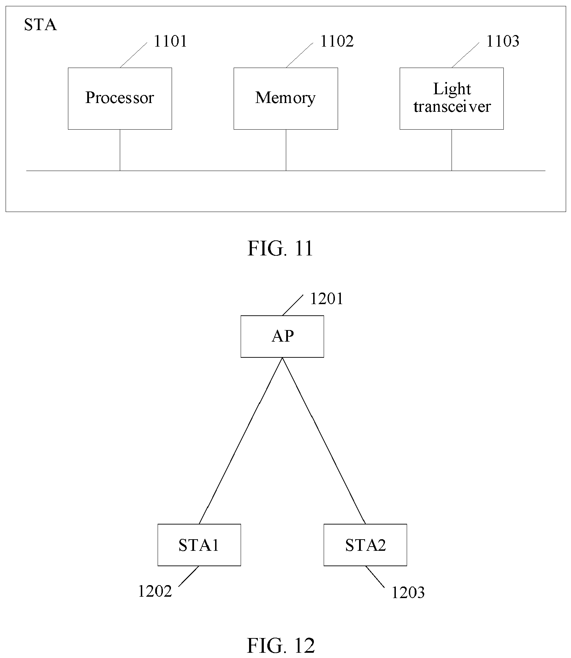

FIG. 11 is a schematic diagram of a structure of another possible STA according to an embodiment of this application. As shown in FIG. 11, the STA includes a processor 1101, a memory 1102, and a light transceiver 1103. The processor 1101, the memory 1102, and the light transceiver 1103 are connected to each other through a line. The memory 1102 is configured to store program instructions and data. The light transceiver 1103 includes a transmitter and a receiver. In a possible implementation, the memory 1102 stores program instructions and data that support the steps in the embodiments shown in FIG. 2 and FIG. 5, and the processor 1101 and the light transceiver 1103 are configured to perform the method steps on a STA side in the embodiments shown in FIG. 2 and FIG. 5. Specifically, the light transceiver 1101 is configured to perform an operation of beam sending and receiving, and the processor 1101 is configured to perform another operation except beam sending and receiving.

It should be noted that, the processors shown in FIG. 10 and FIG. 11 may be a general-purpose central processing unit (central processing unit, CPU), a microprocessor, an application-specific integrated circuit ASIC, or at least one integrated circuit, and are configured to execute a related program, to implement the technical solutions provided in embodiments of this application. The memories shown in FIG. 10 and FIG. 11 may store an operating system and another application program. When the technical solutions provided in embodiments of this application are implemented by using software or firmware, program code used for implementing the technical solutions provided in embodiments of this application is stored in the memory and is executed by the processor. In an embodiment, the processor may include the memory inside. In another embodiment, the processor and the memory are two independent structures.

FIG. 12 is a schematic diagram of a structure of a spatial light communication system according to an embodiment of this application. The spatial light communication system includes at least an AP (1201), a STA1 (1202), and a STA2 (1203). The AP (1201) is configured to perform some or all steps of any method performed by the AP in the embodiments shown in FIG. 2 and FIG. 5. The STA1 (1202) is configured to perform some or all steps of any method performed by the STA in the embodiments shown in FIG. 2 and FIG. 5. The STA2 (1203) is configured to perform some or all steps of any method performed by the STA in the embodiments shown in FIG. 2 and FIG. 5.

A person of ordinary skill in the art may understand that all or some of the steps of the foregoing embodiments may be implemented by hardware or a program instructing related hardware. The program may be stored in a computer-readable storage medium. The storage medium mentioned above may be a read-only memory, a random access memory, or the like. Specifically, for example, the processing unit or processor may be a central processing unit, a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

When software is used to implement the functions, all or some of the method steps described in the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A spatial light transmission method, comprising:
generating, by an access point AP, original spatial light;
modulating, by the AP, the original spatial light to obtain first spatial light, and modulating the original spatial light to obtain second spatial light, wherein a first modulation parameter of the first spatial light is different from a second modulation parameter of the second spatial light; and
splitting, by the AP, the first spatial light and the second spatial light, adjusting a deflection direction of the first spatial light to send the first spatial light to a first stationSTA, and adjusting a deflection direction of the second spatial light to send the second spatial light to a second STA, wherein the first spatial light is transmitted along a first light path, and the second spatial light is transmitted along a second light path.

2. The method according to claim 1, wherein that a first modulation parameter of the first spatial light is different from a second modulation parameter of the second spatial light comprises at least one of the following:
a time period for emitting the first spatial light is different from a time period for emitting the second spatial light;
a first flicker frequency of the first spatial light is different from a second flicker frequency of the second spatial light;
a first wavelength of the first spatial light is different from a second wavelength of the second spatial light; or
a first light intensity of the first spatial light is different from a second light intensity of the second spatial light.

3. The method according to claim 1 or 2, wherein the method further comprises:
identifying, by the AP, first return light from the first STA based on the first modulation parameter, and identifying second return light from the second STA based on the second modulation parameter, wherein a transmission path of the first return light is the same as that of the first spatial light, and a transmission path of the second return light is the same as that of the second spatial light.

4. The method according to claim 1 or 2, wherein the method further comprises:
determining, by the AP, a first light filtering manner used by the first STA and a second light filtering manner used by the second STA; and
identifying, by the AP, first return light from the first STA based on the first light filtering manner, and identifying second return light from the second STA based on the second light filtering manner, wherein the first return light is obtained by the first STA by performing light filtering on the first spatial light based on the first light filtering manner, the second return light is obtained by the second STA by performing light filtering on the second spatial light based on the second light filtering manner, a transmission path of the first return light is the same as that of the first spatial light, and a transmission path of the second return light is the same as that of the second spatial light.

5. The method according to any one of claims 1 to 4, wherein the method further comprises:
modulating, by the AP, the original spatial light to obtain third spatial light, and adjusting a deflection direction of the third spatial light to send the third spatial light to a third STA, wherein a third modulation parameter of the third spatial light is different from both the first modulation parameter and the second modulation parameter, and the third spatial light is transmitted along a third light path.

6. The method according to any one of claims 1 to 5, wherein the original spatial light is beacon light or communication light.

7. A spatial light transmission method, comprising:
receiving, by a station STA, original spatial light sent by an access point AP;
determining, by the STA, a first modulation parameter based on an indication message from the AP, or selecting, by the STA, a first modulation parameter from a locally-stored modulation parameter set;
modulating, by the STA, the original spatial light based on the first modulation parameter to obtain first spatial light, wherein the first modulation parameter comprises a first flicker frequency, a first wavelength, and/or a first light intensity; and
sending, by the STA, the first spatial light to the AP, wherein a transmission path of the first spatial light is the same as that of the original spatial light.

8. An access point AP, comprising a light source, a light modulation apparatus, a light splitting apparatus, and a beam deflection apparatus, wherein
the light source is configured to: generate original spatial light;
the light modulation apparatus is configured to: modulate the original spatial light to obtain first spatial light, and modulate the original spatial light to obtain second spatial light, wherein a first modulation parameter of the first spatial light is different from a second modulation parameter of the second spatial light;
the light splitting apparatus is configured to: split the first spatial light and the second spatial light; and
the beam deflection apparatus is configured to: adjust a deflection direction of the first spatial light to send the first spatial light to a first STA, and adjust a deflection direction of the second spatial light to send the second spatial light to a second STA, wherein the first spatial light is transmitted along a first light path, and the second spatial light is transmitted along a second light path.

9. The AP according to claim 8, wherein that a first modulation parameter of the first spatial light is different from a second modulation parameter of the second spatial light comprises at least one of the following:
a time period for emitting the first spatial light is different from a time period for emitting the second spatial light;
a first flicker frequency of the first spatial light is different from a second flicker frequency of the second spatial light;
a first wavelength of the first spatial light is different from a second wavelength of the second spatial light; or
a first light intensity of the first spatial light is different from a second light intensity of the second spatial light.

10. The AP according to claim 8 or 9, wherein the AP further comprises a photodetector, and the photodetector is configured to:
identify first return light from the first STA based on the first modulation parameter, and identify second return light from the second STA based on the second modulation parameter, wherein a transmission path of the first return light is the same as that of the first spatial light, and a transmission path of the second return light is the same as that of the second spatial light.

11. The AP according to claim 8 or 9, wherein the AP further comprises a photodetector, and the photodetector is configured to:
determine a first light filtering manner used by the first STA and a second light filtering manner used by the second STA; and
identify first return light from the first STA based on the first light filtering manner, and identify second return light from the second STA based on the second light filtering manner, wherein the first return light is obtained by the first STA by performing light filtering on the first spatial light based on the first light filtering manner, the second return light is obtained by the second STA by performing light filtering on the second spatial light based on the second light filtering manner, a transmission path of the first return light is the same as that of the first spatial light, and a transmission path of the second return light is the same as that of the second spatial light.

12. The AP according to any one of claims 8 to 11, wherein the processor is further configured to: modulate the original spatial light to obtain third spatial light; and
the beam deflection apparatus is further configured to: adjust a deflection direction of the third spatial light to send the third spatial light to a third STA, wherein a third modulation parameter of the third spatial light is different from both the first modulation parameter and the second modulation parameter, and the third spatial light is transmitted along a third light path.

13. The AP according to any one of claims 8 to 12, wherein the original spatial light is beacon light or communication light.

14. A station STA, comprising a light returning apparatus and a light modulation apparatus, wherein
the light returning apparatus is configured to: receive original spatial light sent by an access point AP;
the light modulation apparatus is configured to: determine a first modulation parameter based on an indication message from the AP, or select a first modulation parameter from a locally-stored modulation parameter set; and
modulate the original spatial light based on the first modulation parameter to obtain first spatial light, wherein the first modulation parameter comprises a first flicker frequency, a first wavelength, and/or a first light intensity; and
the light returning apparatus is further configured to: send the first spatial light to the AP, wherein a transmission path of the first spatial light is the same as that of the original spatial light.

15. A spatial light communication system, comprising an AP, a first STA, and a second STA, wherein
the AP is configured to: generate original spatial light;
modulate the original spatial light to obtain first spatial light, and modulate the original spatial light to obtain second spatial light, wherein a first modulation parameter of the first spatial light is different from a second modulation parameter of the second spatial light; and
split the first spatial light and the second spatial light, adjust a deflection direction of the first spatial light to send the first spatial light to the first STA, and adjust a deflection direction of the second spatial light to send the second spatial light to the second STA, wherein the first spatial light is transmitted along a first light path, and the second spatial light is transmitted along a second light path;
the first STA is configured to: send first return light to the AP, wherein a transmission path of the first return light is the same as that of the first spatial light;
the second STA is configured to: send second return light to the AP, wherein a transmission path of the second return light is the same as that of the second spatial light; and
the AP is further configured to: identify the first return light based on the first modulation parameter, and identify the second return light based on the second modulation parameter.

16. A spatial light communication system, comprising an AP, a first STA, and a second STA, wherein
the AP is configured to: split original spatial light to obtain first spatial light and second spatial light, adjust a deflection direction of the first spatial light to send the first spatial light to the first STA, and adjust a deflection direction of the second spatial light to send the second spatial light to the second STA;
the first STA is configured to: modulate the first spatial light based on a first modulation parameter to obtain first return light, and send the first return light to the AP, wherein a transmission path of the first spatial light is the same as that of the first return light; and
the second STA is configured to: modulate the second spatial light based on a second modulation parameter to obtain second return light, and send the second return light to the AP, wherein a transmission path of the second spatial light is the same as that of the second return light, and the first modulation parameter is different from the second modulation parameter.

17. A computer-readable storage medium, comprising computer instructions, wherein when the computer instructions are run on a computer device, the computer device is enabled to perform the method according to any one of claims 1 to 7.
